# EUROPEAN PATENT APPLICATION

(11) **EP 1 037 214 A1**
(43) Date of publication of application: **20.09.2000**
(21) Application number: 00302124.3
(22) Date of filing: 15.03.2000
(51) Int. Cl.: G21C 7/24, C22C 27/00, C22F 1/18

(54) **A hafnium alloy having high corrosion resistance, neutron absorber for reactor control rods made of same, reactor control rod, reactor and nuclear power generation plant**

(30) Priority: 16.03.1999 JP 6954199
(71) Applicant: Hitachi, Ltd., Chiyoda-ku, Tokyo 101-8010 (JP)
(72) Inventor: Tadashi, Fujieda, Hitachi-shi, Ibaraki 319-1225 (JP); Iwao, Takase, Naka-gun, Ibaraki 319-1112 (JP); Masahisa, Inagaki, Hitachi-shi, Ibaraki 319-1225 (JP); Akira, Koizumi, Hitachi-shi, Ibaraki 317-0066 (JP)
(74) Representative: Paget, Hugh Charles Edward

(57) **Abstract**

Provided is a hafnium alloy having high plastic workability and high corrosion resistance, a reactor control rod in which this hafnium alloy is used, a neutron absorber for reactor rods, a reactor control rod in which this neutron absorber is used, a reactor, and a nuclear power generation plant. The neutron absorber for reactor control rods is made of a hafnium alloy of a specific composition or its alloy and comprises a strip-like cylindrical long member. The hafnium alloy contains, by weight, at least one selected from the group consisting of 0.03 to 1.5% Cr, 0.03 to 1.5% Sn and 0.03 to 2.0% FeO and the sum of the Hf content and the Zr content, which is from 0.1 to 4.5%, is not less than 97%.

## Description

### BACKGROUND OF THE INVENTION

The present invention relates to a novel hafnium alloy having high corrosion resistance, a neutron absorber for reactor control rods made of this hafnium alloy, a reactor control rod, a reactor in which this control rod is used, and a nuclear power generation plant.

Although the thermal neutron absorption cross section of hafnium is not always large, hafnium has many peaks in the resonance energy region and hence provides a nuclear property that is effective when it is used as reactor control rods. At the same time, hafnium is tried as long-life control rods because it provides excellent workability and has relatively good corrosion resistance even in high-temperature, highpressure steam. Reactor control rods made of hafnium are currently used in direct contact with reactor water although they were initially used by being sealed from reactor water by means of stainless steel.

When hafnium is loaded into a reactor and used as control rods for a long time, white corrosion products are formed in spotty form on the surface in the course of use and develop into lamellar, porous oxide films after passing the stage of nodular corrosion. Thus, there occurs fears that part of these white oxide films may exfoliate as they grow.

In currently-used control rods for a BWR (boiling water reactor), neutron absorption tubes, which are small-diameter stainless steel tubes filled with powder of boron carbide (B₄C) as a neutron absorber, are arranged inside of a cruciform sheath made of stainless steel. One such control rod, along with four sets of fuel assemblies, constitutes the reactor core unit. In other words, the output of four sets of fuel assemblies is controlled by one control rod provided for them.

The operation cycle of plants is being lengthened in order to improve their utilization rate in the future. Therefore, extending the service life of control rods is an urgent necessity. With this being the situation, there are increasing cases where hafnium is employed in currently-used BWR control rods. In JP=A-58-44237, for example, a control rod is proposed in which hafnium is used in the upper portion and side portion of the control rod. Further, in JP-A-56-97897 or JP-A-56-74690, a control rod is disclosed in which hafnium or a hafnium alloy is used in plate form.

Although it is said that hafnium materials have excellent corrosion resistance in high-temperature water, their corrosion resistance is not sufficient when they are used in the environment of a BWR for a long time. In JP-A-59-208043, JP-A-61-66188, JP-A-9-500931, etc., alloys to which at least one element selected from the group consisting of Fe, Sn, Ni, Cr, Nb and Zr is added are proposed as alloys with improved corrosion resistance. However, because in these alloys, large amount of additives are added and various alloying elements are adjusted, the possibility arises that this will result in a rise in material cost, a decrease in workability and an increase in variations in properties.

When hafnium is loaded into a reactor and used as control rods for a long time, oxide films are formed with the lapse of time due to the oxidation reaction with reactor water. Exfoliation occurs because these oxide films grow unevenly and develop in nodular form and because this process is accompanied by white corrosion. The exfoliation of the oxide films results in the deterioration of the control characteristic of control rods and constitutes a major obstacle to the extension of control rod service life.

### SUMMARY OF THE INVENTION

An object of the present invention is to solve the problems associated with the prior art, and provide for a neutron absorber for reactor control rods using a hafnium alloy that has a high plastic workability and high corrosion resistance, the reactor control rods, a nuclear reactor using the same, and its power generation plant.

According to the invention, there is provided a neutron absorber for reactor control rods, which is comprised of a Hf base alloy containing, by weight, 0.02 to 4.5% Zr and not less than 95% Hf, or containing, in addition to the above, at least one selected from the group consisting of 0.01 to 1.0% Cr, 0.01 to 2.0% Fe, 0.03 to 1.5% Sn, 0.03 to 1.5% Nb, 0.01 to 2.0% Mo and incidental impurities, and wherein an oxide film is formed on the surface thereof.

According to one aspect of the present invention, there is provided a hafnium alloy having high corrosion resistance, which comprises preferably, by weight, 0.03 to 0.8% Cr, 0.1 to 4.5% Zr, and the balance Hf and incidental impurities.

According to another aspect of the present invention, there is provided a hafnium alloy having high corrosion resistance, which comprises preferably, by weight, 0.03 to 0.5% Sn, 0.05 to 0.5% Fe, 0.1 to 4.5% Zr, and the balance Hf and incidental impurities.

According to still another aspect of the present invention, there is provided a hafnium alloy having high corrosion resistance, which preferably contains, by weight, 0.03 to 1.5% Sn, 0.03 to 2.0% Fe and 0.1 to 4.5% Zr. In this hafnium alloy, the sum of the Hf and Zr contents is not less than 97% and the Sn/Fe ratio is from 0.2 to 1.6.

According to still more aspect of the present invention, there is provided a hafnium alloy having high corrosion resistance, which comprises preferably, by weight, 0.03 to 0.5% Sn, 0.03 to 0.5% Fe, 0.03 to 0.5% Cr, 0.1 to 4.5% Zr, and the balance Hf and incidental impurities.

According to still more another aspect of the present invention, there is provided a hafnium alloy having high corrosion resistance, which contains preferably, by weight, 0.03 to 1.5% Sn, 0.03 to 2.0% Fe, 0.03 to 1.5% Cr and 0.1 to 4.5% Zr. In this hafnium alloy, the sum of the Hf and Zr contents is not less than 97% and the Sn/Fe+Cr ratio is from 0.05 to 0.5.

According to still another aspect of the present invention, there is provided a hafnium alloy having high corrosion resistance, which comprises preferably, by weight, 0.03 to 0.5% Sn, 0.03 to 0.5% Cr, 0.1 to 4.5% Zr, and the balance Hf and incidental impurities.

According to still more another aspect of the present invention, there is provided a hafnium alloy having high corrosion resistance, which contains, by weight, 0.03 to 1.5% Sn, 0.03 to 2.0% Fe, 0.03 to 1.5% Cr, 0.03 to 1.5% Nb and 0.1 to 4.5% Zr. In this hafnium alloy, the sum of the Hf and Zr contents is preferably not less than 97% and the Sn/Fe+Cr+Nb ratio is from 0.1 to 0.5.

According to still further aspect of the present invention, there is provided a hafnium alloy having high corrosion resistance, which comprises preferably, by weight, 0.03 to 0.5% Sn, 0.03 to 0.5% Fe, 0.03 to 0.5% Cr, 0.05 to 0.5% Nb, 0.1 to 4.5% Zr, and the balance Hf and incidental impurities.

According to still more aspect of the present invention, there is provided a hafnium alloy having high corrosion resistance with a Hf content of not less than 97 wt.%. In this hafnium alloy, the Vickers hardness at room temperature is a condition as hot-rolled with a reduction of 50% of thickness is from 220 to 250 and the corrosion weight gain after heating in steam at 410° C for 8 hours and at 530° C for 16 hours is not more than 50 mg/cm².

According to still further aspect of the present invention, there is provided a neutron absorber for reactor control rods, which is made of any of the above various kinds of hafnium alloys, and has an oxide film of the alloy itself on its surface. This neutron absorber for reactor control rods is constituted as a strip-like cylindrical long member.

According to still another aspect of the present invention, there is provided a reactor control rod which comprises a handle, a sheath connected to the handle, a neutron absorber installed in the sheath, a tie rod for securing the sheath in cross form, a fall speed limiter for controlling the fall speed in reactor water provided below the tie rod, and a coupling socket provided in the lower part of the limiter, wherein the neutron absorber is comprised of any one of the above-mentioned neutron absorbing alloys.

In the present invention, the service life of reactor control rods is substantially improved by being made of a novel hafnium alloy in which the corrosion resistance in high-temperature water is remarkably improved by the combined addition of tin, zirconium, chromium, iron and niobium in specific relations and by formation of dense oxide films on the surface thereof by oxidation reaction.

The effect of elements on the corrosion resistance of hafnium was examined. As a result, it became for the first time apparent that the formation of dense oxide layers and a substantial improvement in corrosion resistance are achieved by adding appropriate amounts of tin, iron, chromium and niobium to such an extent as the mechanical properties of hafnium are not impaired thereby.

Zirconium is present during the production of hafnium and is contained in amounts of not less than 0.02%, preferably in amounts of 0.1 to 4.5 wt.%, and most preferably in amounts of 0.05 to 2.0 wt.%.

For the amounts of alloying elements added (wt.%), Sn should be added in amounts of 0.03 to 1.50%. If Sn is added in amounts of under 0.03%, the addition is ineffective in improving strength and corrosion resistance. Conversely, contents exceeding 1.5% are undesirable because the formation of oxide films becomes excessive. Sn contents of 0.03 to 0.05% are especially preferable.

Cr is effective even if it is added singly in amounts of not less than 0.01%, and more preferably in amounts of 0.03 to 1.5%. When Cr is added in combination with Sn, oxide films become more stable and denser than when it is added singly. Cr contents of 0.05 to 0.5% are especially preferable.

Corrosion resistance is remarkably improved by adding Fe in amounts of not less than 0.01& and more preferably in amount of 0.03 to 2.00%. However, because adding Fe alone results in the formation of unstable oxide films accompanied by nodular corrosion, uniform corrosion is caused by adding Fe in combination with Sn, thereby making oxide films dense. Fe contents exceeding 2.0% result in a decrease in the ductility of materials. Fe contents of 0.05 to 0.5% are especially preferable.

For Nb, addition of trace amounts of 0.01 to 1.50% is good. When Nb is added singly, corrosion is somewhat accelerated and corrosion resistance deteriorates. However, addition of Nb in combination with Sn, Fe and Cr suppresses corrosion and makes oxide films stronger and harder. In particular, addition of Nb lessens and increase in hardness resulting from the addition of Sn, Fe and Cr and, therefore, Nb can contribute to an improvement in corrosion resistance by raising the Sn, Fe and Cr contents. Nb contents of 0.05 to 0.5% are especially preferable.

For Mo, addition in amounts of 0.01 to 2.0% improves corrosion resistance. It is, however, more preferable in amounts of 0.05 to 1.0%.

Similarly, regarding the addition of Sn+Fe or Cr, and increase in hardness is lessened by adding Cr in the former case and Sn in the latter case, thus contributing to an improvement in corrosion resistance and oxidation resistance.

Sn/Fe ratios of 0.2 to 1.6 are preferable. High corrosion resistance can be obtained in this range.

At Sn/Fe+Cr ratios of 0.05 to 0.5, high corrosion resistance can be obtained without an increase in hardness.

Similarly, high corrosion resistance can be obtained without an increase in hardness at Sn/Fe+Cr+Nb ratios of 0.1 to 0.5.

When the sum of the Hf and Zr contents is not lower than 97%, a sufficient function as a neutron absorber is ensured and, at the same time, materials with high workability necessary for making bar-like members and strip-like cylindrical members can be obtained.

In the control rod that is constructed in a manner that sheathes with a U-shaped cross section are attached to the distal end of each side of a tie rod with a cruciform cross section and that a reactivity-controlling member made of a hafnium alloy with a round-bar-like, plate-like or hollow oval cross section is provided in this sheath, an anodic oxide film is formed on the whole surface of the reactivity-controlling member.

In manufacturing the BWR control rod of the present invention, anodic oxidation is performed in an electrolyte of ammonium borate or oxalic acid while using an electrically conductive material as the cathode and an hafnium alloy connected as the anode.

It is desirable to effect anodic oxidation in the above electrolyte while using platinum, stainless steel, etc. as the cathode and a hafnium alloy connected as the anode at a constant voltage in the rang of 10 to 300 V obtained from a d.c. power source.

In order to form oxide films on the internal and external surfaces of a hafnium alloy tube, a cathode member is inserted into the tube and another cathode member is installed on the external surface of the tube and anodic oxidation is performed by bringing the cathode members into electrical conduction by means of an electrolytic treatment apparatus.

### BRIEF DESCRIPTION OF THE DRAWINGS

The other features and advantages of the invention will become more apparent from the following description taken with the accompanying drawings, in which:
Fig. 1 is a graph of the relationship between the oxide film thickness and the Cr content;
Fig. 2 is a graph of the relationship between the oxide film thickness and the Sn content;
Fig. 3 is a graph of the relationship between the oxide film thickness and the Sn content;
Fig. 4 is a graph of the relationship between the corrosion weight gain and the Sn+Fe+Cr+Nb content;
Fig. 5 is a graph of the relationship between the corrosion weight gain and the Sn/Fe ratio;
Fig. 6 is a graph of the relationship between the corrosion weight gain and the Sn/Fe+Cr ratio;
Fig. 7 is a graph of the relationship between the corrosion weight gain and the Sn/Fe+Cr+Nb ratio;
Fig. 8 is a graph of the relationship between the corrosion weight gain and the Fe content or Sn content;
Fig. 9 is a graph of the relationship between the hardness after hot rolling and the Sn+Fe+Cr+Nb content;
Fig. 10 is a graph of the relationship between the corrosion weight gain and the hardness after hot rolling;
Fig. 11 is a partially cutaway perspective view of a reactor control rod;
Fig. 12 is a perspective view of a part of a neutron absorber for reactor control rods;
Fig. 13 is a perspective view of a neutron absorber for reactor control rods;
Fig. 14 is a perspective view, partly in section, of a reactor core; and
Fig. 15 is a perspective view of a control-rod driving mechanism.

### DETAILED DESCRIPTION OF THE PREFERRED EMBODIMENTS

Hereinafter, embodiments of the present invention will be described.

### Embodiment 1:

The chemical compositions (wt.%) of test specimens are shown in Table 1. In the table, Nos. 1 to 19 are the materials of the present invention, Nos. 20 and 21 are conventional materials.

The chemical compositions of these materials are classified into alloys to which Cr is singly added, the binary alloys of Sn-Fe and Sn-Cr, the ternary alloys of Sn-Fe-Cr and Sn-Fe-Nb, and the quaternary alloys of Sn-Fe-Cr-Nb. Zr which, in prior arts, remains as an impurity in amounts up to 4.5% during the production of hafnium, was reduced into a level up to 0.02 to 3.0% in the present invention.

**Table 1**

| No. | | | Chemical Composition (weight %) | | | | | |
|---|---|---|---|---|---|---|---|---|
| | Sn | Fe | Cr | Nb | Zr | Sn/Fe | Sn/Fe+Cr | Sn/Fe+Cr+Nb |
| 1 | - | - | <0.01 | - | 0.78 | - | - | - |
| 2 | - | - | 0.09 | - | 0.80 | - | - | - |
| 3 | - | - | 0.50 | - | 0.75 | - | - | - |
| 4 | - | - | 2.00 | - | 0.80 | - | - | - |
| 5 | <0.01 | 0.15 | - | - | 1.58 | 0 | - | - |
| 6 | 0.06 | 0.12 | - | - | 1.78 | 0.50 | - | - |
| 7 | 0.10 | 0.13 | - | - | 1.50 | 0.77 | - | - |
| 8 | 0.47 | 0.13 | - | - | 1.80 | 3.62 | - | - |
| 9 | 1.00 | 2.10 | - | - | 1.85 | 0.48 | - | - |
| 10 | <0.01 | 0.05 | 0.05 | - | 0.80 | 0 | 0 | - |
| 11 | 0.05 | 0.06 | 0.10 | - | 0.85 | 0.83 | 0.31 | - |
| 12 | 0.09 | 0.10 | 0.09 | - | 0.85 | 0.90 | 0.47 | - |
| 13 | 0.15 | 2.00 | 0.10 | - | 0.80 | 0.08 | 0.07 | - |
| 14 | 0.12 | - | 0.15 | - | 0.87 | - | 0.80 | - |
| 15 | 3.00 | - | 0.50 | - | 0.75 | - | 6.0 | - |
| 16 | - | - | - | 0.13 | 1.85 | 0 | - | - |
| 17 | 0.07 | 0.11 | 0.05 | 0.12 | 1.78 | 0.64 | 0.47 | 0.25 |
| 18 | 0.13 | 0.10 | 0.10 | 0.10 | 1.85 | 1.30 | 0.65 | 0.43 |
| 19 | 0.30 | 0.15 | 0.40 | 2.60 | 1.75 | 2.00 | 0.55 | 0.095 |
| 20 | <0.01 | 0.02 | <0.01 | <0.01 | 1.85 | 0 | 0 | 0 |
| 21 | <0.01 | 0.03 | <0.01 | <0.01 | 0.80 | 0 | 0 | 0 |

For each of the samples, an alloy was melted twice by arc melting and a desired ingot was produced. After that, thermal refining treatment was performed by heating in a vacuum at 1,100°C for 1 hour and then hot rolling was performed at 1,000°C to a desired plate thickness. Further, annealing was performed at 820°C. After that, cold rolling was performed. Annealing at 820°C was followed by this cold rolling and these cold rolling and annealing operations were alternately repeated. A 1.7 mm thick sheet was thus produced.

Various properties of the alloys are shown in Table 2. Corrosion properties were evaluated by surface observation and determining corrosion weight gain and the thickness of oxide film based on the result of a two-step corrosion test performed by heating in steam at 410°C for 8 hours and at 530°C for 16 hours. Mechanical properties were evaluated in terms of the workability in hot rolling and cold rolling, hardness, etc. Hot rolling was performed at 1,000°C and a thickness of 5 mm was obtained by rolling a 10 mm thick ingot twice. In this example, the Vickers hardness was measured in an as-hot-rolled condition at room temperature and the degree of work hardening was investigated. After that, annealing was performed at 820°C for 1 hours and sheets of 1 to 2.5 mm in thickness were obtained by performing cold rolling three times, with two annealing operations at 820°C carried out between the three rolling operations. The working ratio was from 20 to 30% by thickness reduction ratio. In the table, the difficulty or ease with which working can be performed relates to cold rolling and the samples classified as "difficult" will develop cracks even with a thickness reduction ratio of 10%.

**Table 2**

| No. | Corrosion weight gain (mg/dm²) | Oxide film thickness (µm) | Hardness after hot rolling (Hv) | Difficult or ease of working |
|---|---|---|---|---|
| 1 | 150 | 15.0 | 225 | ease |
| 2 | 10 | 1.8 | 243 | ease |
| 3 | 12 | 2.0 | 280 | ease |
| 4 | 14 | 2.0 | 450 | difficult |
| 5 | 50 | 10.0 | 220 | ease |
| 6 | 20 | 4.8 | 228 | ease |
| 7 | 25 | 4.0 | 255 | ease |
| 8 | 55 | 4.5 | 446 | difficult |
| 9 | 25 | 3.0 | 450 | difficult |
| 10 | 30 | 5.5 | 230 | ease |
| 11 | 20 | 2.0 | 225 | ease |
| 12 | 20 | 1.5 | 238 | ease |
| 13 | 20 | 1.5 | 240 | ease |
| 14 | 25 | 1.8 | 230 | ease |
| 15 | 50 | 8.0 | 240 | ease |
| 16 | 250 | 20.0 | 232 | ease |
| 17 | 25 | 1.5 | 239 | ease |
| 18 | 20 | 1.5 | 235 | ease |
| 19 | 40 | 6.0 | 232 | ease |
| 20 | 93 | 9.9 | | |
| 21 | 47 | 8.4 | | |

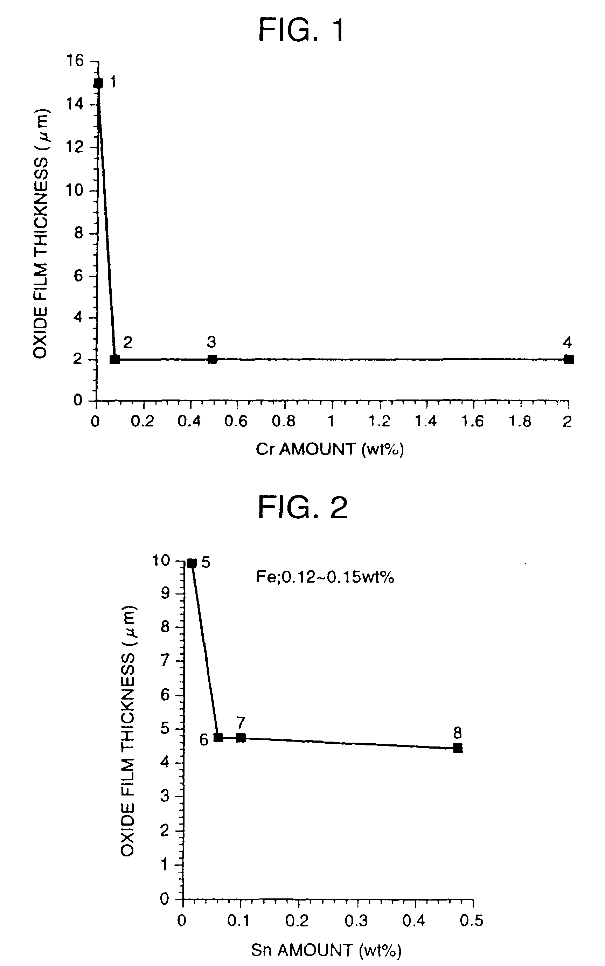

In the alloys to which Cr is singly added, the corrosion weight gain is considerably small, the oxide film thickness is not more than 2 µm and dense oxides are formed when the amount of Cr added is from 0.02 to 1.50 wt.%. Workability was also good. For the effect of the amount of Cr added, it is apparent that, as shown in Fig. 1, Cr is effective in improving corrosion resistance even with a very low content. Corrosion resistance is also improved at a high content of 20 wt.%. However, high Cr contents are undesirable because the ductility of materials is impaired in this case.

The binary alloys of Sn-Fe are described. The effect is observed even when Fe is singly added. However, oxide films undergo nodular corrosion and, therefore, the addition of Fe alone is not always desirable. Therefore, when Sn is added in combination with Fe, oxide films undergo uniform corrosion and the formation of oxide films that are apt to be exfoliated can be prevented. This effect is shown in Fig. 2. However, if large amounts of Sn and Fe are added, the ductility of members is impaired, which becomes an obstacle in the production of sheets.

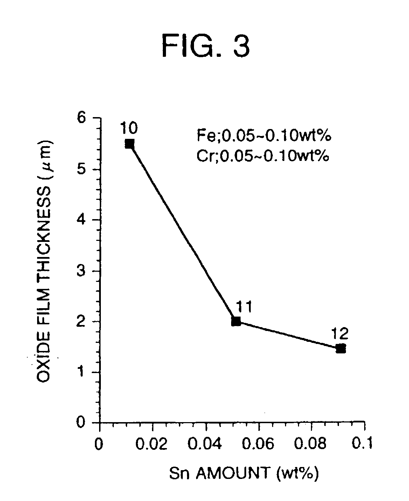

In the ternary alloys of Sn-Fe-Cr, each of these elements contributes to an improvement in corrosion resistance. Because multiple elements are thus contained, they ensure a good effect even when the respective amounts added are small. For the corrosion properties, the oxide film thickness is not more than 2 µm when Fe, Cr and Sn are each contained in an amount of 0.05 wt.%, as shown in Fig. 3. Further, dense oxide films are formed. Thus, corrosion resistance is so good that exfoliation is not observed at all.

In the ternary alloys of Sn-Fe-Nb, the presence of Nb accelerates uniform corrosion in the formation of oxide films and is effective in preventing the exfoliation of oxides.

The quaternary alloys of Sn-Fe-Cr-Nb are described. As a matter of course, corrosion resistance is improved in these alloys. In addition, because these alloys have good corrosion resistance, they are especially suitable for use in high-strength members. However, ductility is low in comparison with other alloys of the present invention and it is, therefore, necessary to use the utmost care in the production of sheets.

To investigate the corrosion properties in high-temperature water, a long-duration corrosion test at 288° C and 80 kg/cm² was conducted and it was ascertained that all the materials of the present invention have excellent corrosion resistance.

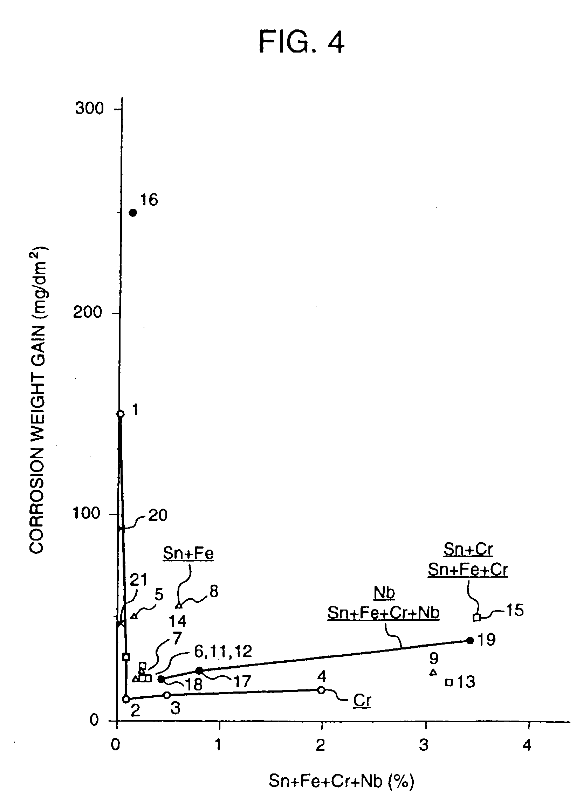

Fig. 4 is a graph of the relationship between the corrosion weight gain and the Sn+Fe+Cr+Nb content. As shown in the figure, it is apparent that high corrosion resistance of not less than 50 mg/dm² can be obtained by addition of trace amounts of Cr, Sn+Fe, Sn+Cr, Sn+Fe+Cr, Nb and Sn+Fe+Cr+Nb. A greater effect cannot be obtained even when these elements are added in amounts of not less than 1%.

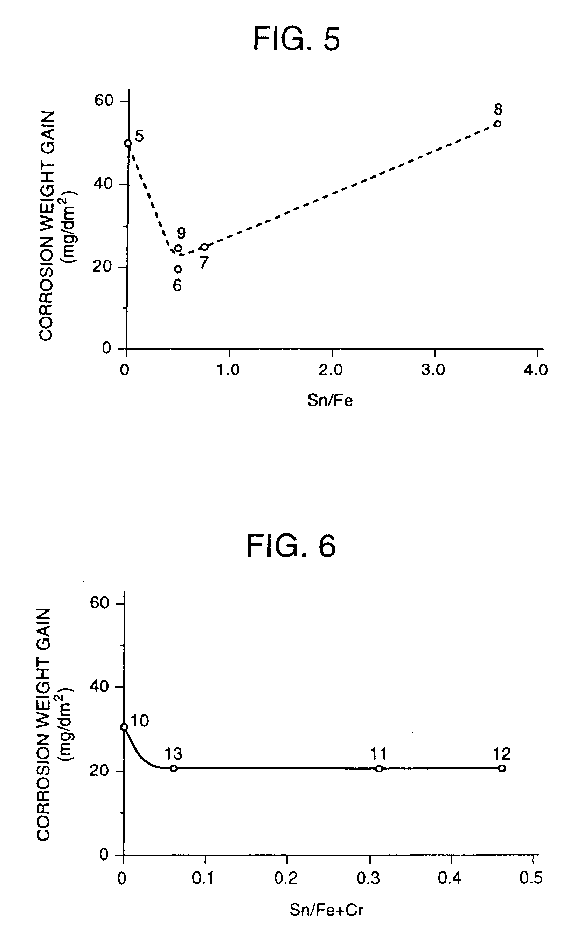

Fig. 5 is a graph of the relationship between the corrosion weight gain and the Sn/Fe ratio. From the figure, it is apparent that corrosion weight gain are not more than 40 mg/dm² at Sn/Fe ratios of 0.2 to 1.6 and that high corrosion resistance of not more than 40 mg/dm² is obtained at Sn/Fe ratios of 0.3 to 1.2.

Fig. 6 is a graph of the relationship between the corrosion weight gain and the Sn/Fe+Cr ratio. It is apparent that Sn/Fe+Cr ratios of 0.05 to 0.5 are preferable.

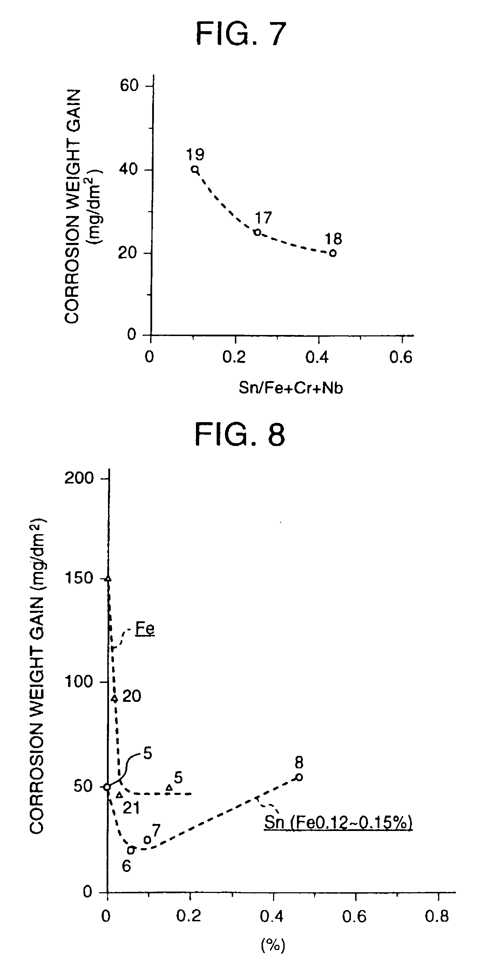

Fig. 7 is a graph of the relationship between the corrosion weight gain and the Sn/Fe+Cr+Nb ratio. It is apparent that high corrosion resistance of not more than 40 mg/dm² is obtained at Sn/Fe+Cr+Nb ratios of not less than 0.1 and the higher the Sn/Fe+Cr+Nb ratio, the higher corrosion resistance. Sn/Fe+Cr+Nb ratios of 0.1 to 0.5 are especially favorable.

Fig. 8 is a graph of the relationship between the corrosion weight gain and the Fe content or Sn content. It is apparent that when Fe is singly added, high corrosion resistance of not less than 50 mg/dm² is obtained with Fe contents of not less than 0.03%. Further, it is apparent that high corrosion resistance of not more than 30 mg/dm² is obtained by adding 0.03 to 0.3% Sn to Fe contents of 0.1 to 0.3%.

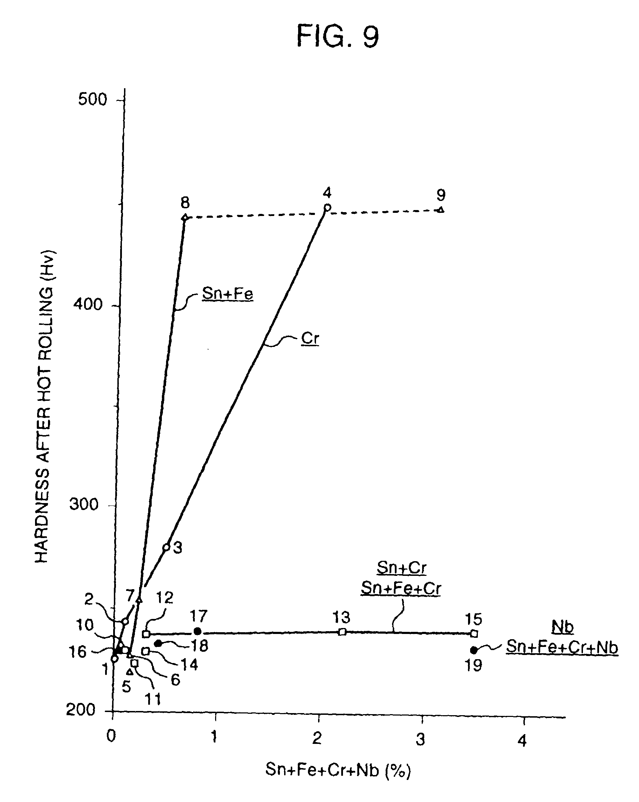

Fig. 9 is a graph of the relationship between the Vickers hardness (Hv) in an as-hot-rolled condition after hot rolling and the Cr, Sn+Fe, Sn+Cr, Sn+Fe+Cr, Nb and Sn+Fe+Cr+Nb contents. As is apparent from the figure, because in particular Sn+Fe and Cr abruptly increase hardness, soft materials with hardness values after work hardening of not more than Hv 260, which are less apt to undergo work hardening, can be obtained by adding Sn+Fe in amounts of not more than 0.3% and Cr in amounts of not more than 0.5%. A noticeable increase in hardness by work hardening was not observed in hafnium alloys containing Sn+Cr, Sn+Fe+Cr, Nb and Sn+Fe+Cr+Nb.

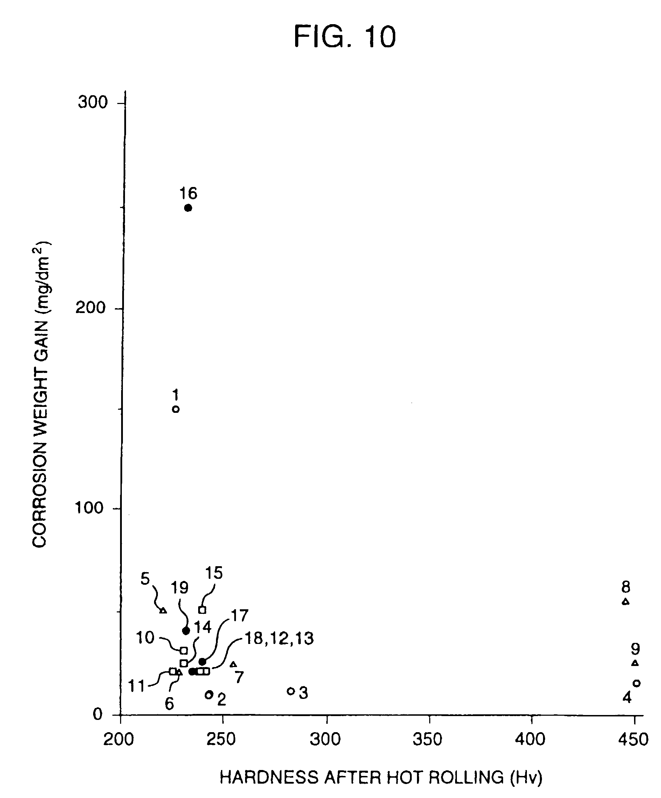

Fig. 10 is a graph of the relationship between the corrosion weight gain and the hardness after hot rolling. In this example, materials with a corrosion weight gain of not more than 50 mg/dm² and a hardness after work hardening of not more than Hv 300 can be obtained by making compositions appropriate. Thus, materials having high workability and high corrosion resistance can be obtained.

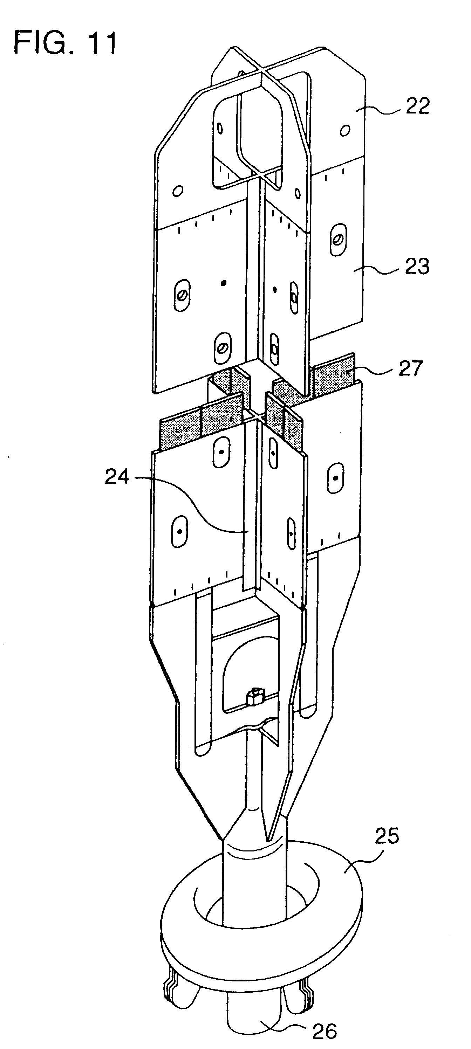

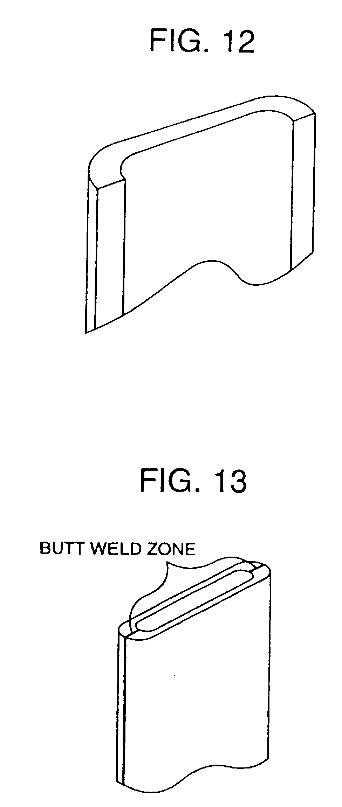

Fig. 11 is a perspective view of a BWR control rod in which one of the hafnium alloys of the present invention is used. In this example, the sample No. 12 given in Table 12 was used. This hafnium alloy, which contains essentially, by weight, 0.09% Sn, 0.10% Fe, 0.09% Cr and 0.85% Zr and the balance Hf and incidental impurities, was produced by arc melting. After melting is repeated twice, thermal refining treatment was performed in a vacuum at 1,100°C for 1 hour and the added elements were made uniform thereby. Next, hot rolling (heating at 1,000°C) was performed and annealing was then conducted at 850°C for 1 hour. Cold rolling and annealing (at 850°C for 1 hour) were repeated to obtain a desired sheet and finally a sheet thickness of 1.7 mm was obtained. A long sheet material was pressed so as to obtain the shape shown in Fig. 12. Two such pressed parts were butted against each other and TIG welded and a strip-like cylindrical reactivity-controlling member 27 as shown in Fig. 13 was obtained and mounted into a control rod sheath made of SUS316L 23. This sheath has through holes here and there and the reactivity-controlling member 27 made of a hafnium alloy is constantly in contact with reactor water. Therefore, this member is required to provide corrosion resistance in high-temperature water. The hafnium alloy in this example had, as with Example 1, a corrosion weight gain of not more than 20 mg/dm², an oxide film thickness of not more than 2.0 µm and a hardness after hot rolling of not more than Hv 250. The reactivity-controlling member 27 in this example was 100 mm wide and 10 mm thick. Each control rod sheath contains two reactivity-controlling members 27 and four sheaths are assembled in cross form. In the figure, the numeral 22 denotes a handle, 23 a sheath, 24 a tie rod, 25 a fall speed limiter, 26 a coupling socket, and 27 a neutron absorber.

Anodic oxide films were formed on the whole surface of the reactivity-controlling member with flat edges used in Example 2. The reactivity-controlling member described in this example is similar to that shown in Fig. 11 to Fig. 13. As shown in these figures, a groove was formed at the end of each side of a cruciform tie rod, a sheath 23 worked to provide a U-shaped cross section was welded to each side of the tie rod 24, and two reactivity-controlling members 27 with an elliptic cross section per sheath were housed in the internal space thus defined. The reactivity-controlling members 27 may have a sheet thickness varied in the direction of the control rod. The reactivity-controlling members 27 may be divided into some parts in the axial direction.

In this embodiment, the hafnium alloy sheet shown in Example 2 was fabricated and worked. First, a curvature by bending was given to the two ends of a long sheet material by sheet bending using a press brake. Next, grooves for welding were prepared by machining. After a check of the size before welding and cleaning treatment, U-shaped members were then butted against each other and an elliptic tube was formed by welding. Next, the elliptic tube was machined to make cooling holes, holes for fixing, etc. and it was subjected to finishing treatment. When this process was completed, the elliptic tube was immersed in an electrolytic cell and oxide film treatment was performed.

A stainless steel cathode rod for the oxidation treatment of the outer surface of the hafnium alloy and a stainless steel cathode rod for the inner surface of the hafnium alloy were located in the electrolytic cell. The electrolytic cell was filled with an electrolyte. At its longitudinal ends the reactivity-controlling member with an elliptic cross section to be subjected to oxidation treatment had round holes for the fixing to a structural member of the control rod. The reactivity-controlling member was lifted while using these round holes. The reactivity-controlling member was lifted while using a conductor introduced through these round holes and connected to the positive electrode of a d.c. power source through a lifting mechanism. Another conductor was extended from the cathode in the electrolytic cell and the reactivity-controlling member was connected to the negative electrode of the d.c. power source.

In this example, the above reactivity-controlling member about 1,800 mm in length and about 50 mm in width was surface treated in four steps.

In the first step, a 1/4 length of the above tube was immersed in the electrolytic cell and oxide films were formed by passing a current from the d.c. power source. After the stabilization of the oxide films, the hafnium alloy tube subjected to oxidation treatment was lowered by means of the lifting device and a 2/4 length of the hafnium alloy tube was then immersed in the electrolytic cell and subjected to oxidation treatment. Stable oxide films were formed in the succeeding third and fourth steps.

After the formation of the oxide films on the surfaces in the above steps, a dimensional check and cleaning were performed. These operations were followed by a usual control rod-assembling step for assembling hafnium alloy tubes in the control rod and a control rod containing reactivity-controlling members subjected to oxidation treatment was completed.

Ammonium borate [1%(NH₄)₂ · 5B₂O₃] was used as the electrolyte. KOH and NaOH are generally used as electrolytes for anodic oxidation in addition to ammonium borates. However, the above electrolyte was used based on a concept that borate ions are less apt to be incorporated into the hafnium alloy bar as an impurity.

At room temperature, a current was passed across the above two poles at a constant voltage of 100 V, 200 V or 300 V, each at a current density of 1 A/dm². The current holding time was about 5 minutes in which the oxide films formed on the specimens are stabilized.

A visual check, corrosion test and hardness test were conducted for the specimens subjected to anodic oxidation treatment. As a result of the visual check, in all specimens treated at each current value the formation of uniform oxide films was observed which contain Hf as the principal constituent and alloying elements. Further, there was no difference between the surfaces of welds and those of base metal and formation of good oxide films was observed. The color tone of films formed at 100 V to 300 V changed from dark blue to dark green due to the effect of voltage. This shows changes in the thickness of oxide film formed and, therefore, the film thickness can be judged from a color tone to some extent.

The obtained reactivity-controlling member was subjected to a corrosion test under the conditions: a test temperature of 410°C for 8 hours + 530°C for 16 hours, a pressure of 105 kg/cm², a dissolved oxygen concentration of 200 to 400 ppb and a flow rate of 10 l/hour. A tendency toward an improvement in corrosion resistance was observed in the hafnium alloy material on which an anodic oxide film was formed; that is, the corrosion weight gain was less than half that observed in the base metal without an oxide film.

Further, the harness of an anodic oxide film was measured while using a micro Vickers hardness tester. It was observed that the hafnium alloy material on which an anodic oxide film was formed has a tendency toward an increase in hardness by more than 1.5 times in comparison with the base metal without an oxide film. In other words, a tendency toward an improvement in wear resistance was suggested.

Because damage and wear in succeeding processes are prevented, a reactivity-controlling member on which a surface protective film is formed by oxide film treatment can be mounted in a control rod while keeping a more uniform surface condition.

Further, during service in an actual reactor, it is possible to ensure high corrosion resistance for a long time in the oxidation environment within a reactor in keeping the capability of reactivity control for a long time and extending service life.

### Embodiment 2:

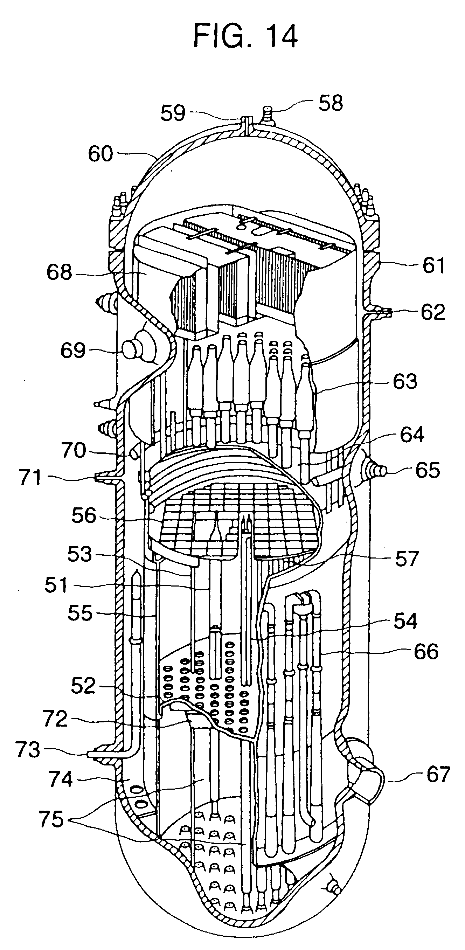

Fig. 14 is a perspective view, partly in section, of a reactor core in which the control rods of Embodiment 1 are used.

This reactor operates at a steam temperature of 286°C and a steam pressure of 70.7 atg and is capable of power generation with an electric output of 500, 800 and 1,100 MW. The names of each part of the reactor are as follows. The reactor core comprises neutron-source pipes 51, core support plates 52, neutron measuring-and-detecting tubes 53, control rods 54, a reactor core shroud 55, an upper lattice plate 56, fuel assemblies 57, a spray nozzle for upper end plate 58, a bent nozzle 59, a pressure vessel lid 60, a flange 61, a measuring nozzle 62, steam separators 63, a shroud head 64, a feed-water entrance nozzle 65, jet pumps 66, steam driers 68, a steam exit nozzle 69, a feed-water sparger 70, a core spray nozzle 71, a lower lattice 72, a recirculating-water entrance nozzle 73, a baffle plate 74, and a control-rod guide tube 75.

The above upper lattice plate 56 has rimmed barrels, flanges and grid plates, which are constructed from rolled plates of the polycrystalline steel SUS316. Although the grid plates cross each other, they are not fixed to each other. Further, the core support plate 52 is similarly constructed from a rolled plate of the polycrystalline steel SUS316. It is constructed from a single rolled plate, has holes for attaching fuel-supporting fittings, and is fixed to the furnace at the circumferential surface. Therefore, both the upper lattice plate 56 and the core support plate 55 are of such a construction that there is no weld at the center where they are irradiated with neutrons.

There is provided a control-rod driving mechanism capable of slightly driving by means of an electric motor. This control-rod driving mechanism has rollers made of a sintered compact, which was prepared by mixing a nickel alloy powder containing 25% wt.% chromium with 10 volume % of a chromium carbide (Cr₂C₂) with particle sizes of 20 to 30 microns and sintering the mixture. Thirty-two sets of pins made of a high-strength Fe alloy were mounted and a load driving test equivalent to 40 years' operation was carried out in a high-temperature circulating water by simulating an actual reactor. As a result, it was found that the roller and pins show very small dimensional changes, thus adequately meeting design standards. Further, any failures under a very low impact load during scram drive did not occur at all.

In the control-rod driving mechanism of this embodiment, the control rod is vertically driven by a driving piston through a piston-driving screw, which is rotated by a motor, via a hollow piston. This control-rod driving mechanism is welded to the reactor pressure vessel. The control rod is driven in the control-rod guide tube. There is also a hydraulically driven piston, which rapidly raises the control rod upward by introducing water through a water introduction tube in an emergency. The hydraulically driven piston is separated from the driving piston. SUS316L is used in portions in contact with high-temperature water. The control rod is of such a construction that it falls under its own weight.

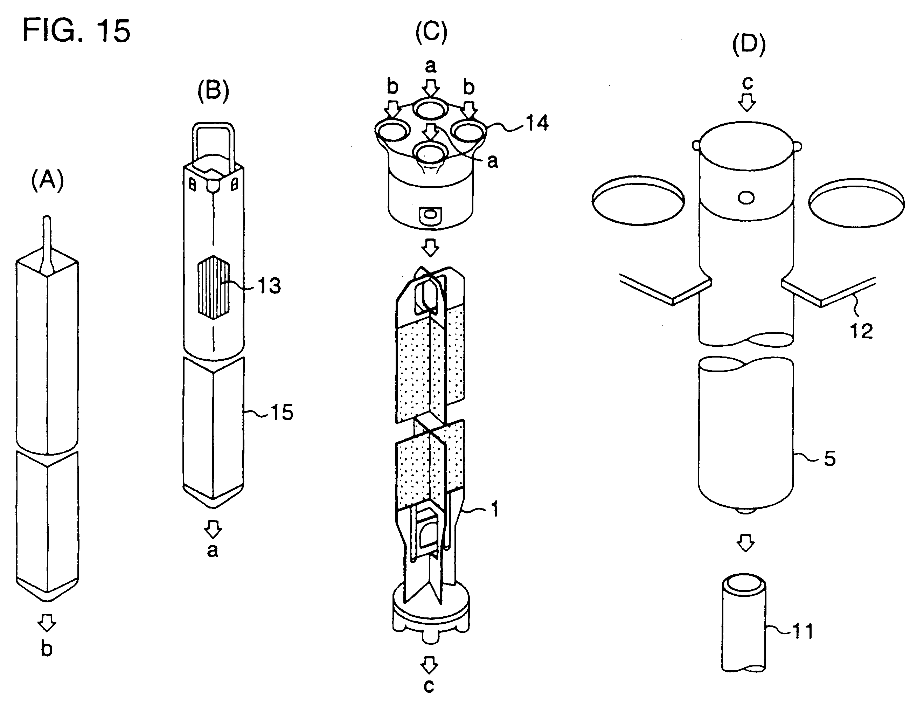

Fig. 15 shows assembly and arrangement drawings of the control rod 11 driven by the control-rod driving mechanism, fuel assemblies (A) and (B), the fuel-supporting fitting 14 and the core support plate 12. Fig. 15 (A) shows a fuel assembly without a handle, which is set in Portion b of Fig. 15 (C). The fuel assembly shown in Fig. 15 (B) has a handle and is set in a portion (a) in Fig. 15 (C). The fuel-supporting fitting 14 is fixed in contact with the core support plate 12 and supports the fuel assembly.

Regarding the control rod 1 in this example, B₄C was used as a withdrawal control rod, and the hafnium alloy of Example 2 was used as a control rod for adjusting power during rated operation. The B₄C control rod was obtained by repeating cold rolling on a Pilger mill and annealing after making tube stock by hot working. SUS316L was used in the sheath, which was obtained by welding sheets after repeating cold rolling and annealing to produce the sheets.

The BWR fuel assembly comprises many fuel rods, spacers in plurality of stages for holding these fuel rods at prescribed mutually spaced intervals, a channel box of rectangular cylinder for housing them, an upper tie plate and a lower tie plate for holding the two ends of the fuel rods, each of which contains fuel pellets in a fuel clad tube, water rods located in the centers of the spacers, and a handle for transferring the whole. These fuel assemblies were assembled by a usual process.

The channel box houses therein the fuel rods and water rods brought together by the spacers. The channel box is fixed to the upper tie rod and lower tie rod by the water rods. The fuel channel box has the shape of a rectangular cylinder, which is obtained by the plasma welding of two equal halves of three types of U-shaped plates 4 m in length and 80, 100 and 120 mm in thickness. This member controls the flow of the steam generated on the fuel rod surface and the high-temperature water flowing among the fuel rods during plant operation, guiding the steam and water upward in a forced manner. Because the internal pressure is a slightly higher than the external pressure, the channel box is used for a long time, with stresses acting on the rectangular cylinder so as to expand it outward.

The channel box of this example is subjected to heat treatment so that the through-thickness orientation ratio (Fr-value) of the crystallographic orientation <0001> is from 0.25 to 0.6, and the transverse orientation ratio (Ft) is from 0.25 to 0.4. These orientation ratios Fr, Fl and Ft are preferably from 0.25 to 0.5, from 0.25 to 0.36, and from 0.25 to 0.36, respectively. Because of this orientation achieved by heat treatment the grain size of βZr crystals becomes from 50 to 300 µm on average (preferably from 100 to 200 µm), substantially preventing radiation elongation, with the result that bending does not occur and the interference between the channel box and the control rods is prevented. As a result, bending does not occur even in channel boxes arranged in the peripheral zone of a reactor even when the degree of burn up is not less than 45 GWd/t and channel boxes can be used without any problems even at 50 or 60 GWd/t. Further, when the degree of burn up is 32 GWd/t as conventionally, the channel box of this example can be used by replacing fuel.

In making the channel box, a sheet of zirconium alloys whose chemical compositions are shown in Table 3 was cold-bent to a U-shape, two U-shaped members 4 m in length were produced and these two halves were laser or plasma welded to form a rectangular cylinder. Uneven spots of welds were finished to obtain flat surfaces. This rectangular cylinder was heated to a β phase temperature range by high-frequency induction heating and rapidly cooled with the cooling water sprayed from a nozzle located directly underneath the high-frequency induction heating coil. The heat treatment of the whole rectangular cylinder is completed when it passes through the coil at a constant speed from above downward. The heating temperature was 1,100°C, and the feed rate of the rectangular cylinder and the output of a high-frequency power source were adjusted so that the holding time at not lower than 980°C becomes 10 seconds and longer. Incidentally, the treatment can be performed at 1,000 to 1,200°C and preferably at 1,050°C to 1,100°C for 3 to 10 seconds. In the heat treatment, and austenitic stainless steel mandrel was fixed to the two ends of the rectangular cylinder by means of screws. The (0002) bottom plane and column plane of a hexagonal column in the (1010) plane, show F-values that are about 1/3 in all of Fr, Fl and Ft. The average grain size of β Zr crystals of the channel box was about 100 µm. After performing this heat treatment, forming was effected with high dimensional accuracy and followed by sand blasting and pickling for the removal of surface oxide films. After that, autoclave treatment by steam was performed.

**Table 3**

| No. | Alloying elements | | | | | |
|---|---|---|---|---|---|---|
| | Sn | Fe | Cr | Ni | O | Zr |
| 1 | 1.50 | 0.21 | 0.10 | - | 0.12 | bal. |
| 2 | 1.50 | 0.15 | 0.10 | 0.10 | 0.12 | bal. |
| 3 | 1.50 | 0.35 | 0.10 | 0.10 | 0.12 | bal |

A channel box of varied wall thickness in contrast to the above channel box with a constant wall thickness was also used in a further example. This channel box has a wall thickness of corners larger than that of sides and provided a longitudinal wall thickness distribution such that the upper portion of each side is thinner than the lower portion thereof. This forming was effected after heat treatment. The forming is performed either by chemical etching with an aqueous mixed acid solution of hydrogen borate and nitric acid by masking or machining. In this example, the outer surface was machined and made concave. This wall thickness distribution may be such that the inner surface is made concave.

A reactor temperature of 288°C, a working rate of not less than 85%, more preferably not less than 90%, and most preferably not less than 92%, and a thermal efficiency of 35°C are obtained as the main specifications of a BWR power generation plant achieved by the above essential features of the present invention.

### Embodiment 3:

The following is an example in which the fuel assembly and control-rod driving mechanism of the present invention were applied to an advanced boiling water reactor (ABWR) as in Embodiment 2.

The reactor pressure vessel is the central equipment of a nuclear power generation plant. In an ABWR, the nozzle portion to which an internal pump is attached, above all, has an optimum sleeve-type shape so that even when temperature and pressure variations occur in the reactor pressure vessel, such changes do not affect the rotatory function of the internal pump and the transfer of heat to the motor portion is small.

Furthermore, the structures in the reactor are constructed in a manner that the effect of the adoption of the internal pump on flow vibration is small. High accuracy of the measurement of the flow rate in the reactor core, including verification by experiments, is ensured in consideration of the partial operation of the internal pump. The measurement of the flow rate of the steam flowing to the turbine is performed by means of a Venturi structure installed in the main steam nozzle portion of reactor pressure vessel. The RPV (reactor pressure vessel) defines the pressure boundary of coolants and, at the same time has the function of containing and holding the core and the structures in the pressure vessel.

A conventional RPV contains 764 fuel assemblies, a jet pump and internal structures, and has an inside diameter of about 6.4 m. Because the number of fuel assemblies increased to 872in the ABWR, an inside diameter of about 7.1 m was given to the RPV in order to secure the space for handling the internal pump in the reactor. The inside height of the conventional RPV was about 22 m, while an inside height of about 21 m was given to the RPV of ABWR in consideration of the following factors:
(a) The stand pipe length was shortened by adopting a high-efficiency steam separator;
(b) The control-rod drop speed limiter was removed by adopting FMCRD;
(c) The upper lid height was decreased by changing the structure of upper lid and main flange; and
(d) The height of the pan portion of lower end plate was decreased.

Because of the adoption of the internal pump, the shape of the lower end plate was changed from the conventional hemispherical shape to a pan shape in order to secure the space necessary for installing the internal pump to the lower part of the pressure vessel and in consideration of the passage of circulating cooling water. Further, the internal pump was constructed by monoblock forging, thus reducing the number of weld lines in design.

A conical shape was given to the support plate in the barrel portion in order to secure the space necessary for handling the internal pump and also in order to install the heat exchanger for the internal pump within the pedestal.

Because of the adoption of the internal pump it becomes unnecessary to use the exit and entrance nozzle of coolant recirculation installed in a conventional plant. Therefore, the ABWR is no longer equipped with a large-pore nozzle below the core zone in the barrel portion and it is unnecessary to imagine a great coolant loss accident.

In the conventional plant, the flow rate limiter was installed in the ascending portion leading to the separation valve in the main steam pipe. By installing this flow rate limiter in the main steam nozzle, the margin of safety against fracture accidents of main steam pipe was increased and the space for the reactor containment was optimized.

The structures in the reactor have the functions of supporting the interior of the reactor, forming the passage of coolants, separating the hot water and steam generated in the core, etc. within the RPV. In addition to these principal roles, the structures in the reactor are required to secure the cooling water passage for water injection into the core in case of accident and to provide sufficient soundness and reliability because of their nature.

When the basic specifications of the steam turbine and power generation equipment for an ABWR plant are compared with those of a BWR plant in terms of 50 Hz, it is found that the ABWR plant is a high-efficiency plant with a 23.3% increase in electrical output for a 19.2% increase in thermal output of reactor.

The same life, periodical inspection intervals, working rate and thermal efficiency as those obtained in Example 4 are obtained in this example also.

According to the present invention, the service life of reactor control rods in the reactor can be substantially extended by dramatically improving the corrosion resistance of the neutron absorber in high-temperature water. Further, because the oxide films formed on the control rods are dense, resistant to exfoliation and stable, the number of spent control rods can be reduced. At the same time, the quantity of radioactive waste can be substantially reduced because the reactivity control capacity can be maintained for a long time.

## Claims

1. A hafnium alloy having high corrosion resistance, consisting essentially, by weight, of 0.03 to 0.8% Cr, 0.1 to 4.5% Zr, and the balance Hf and incidental impurities.

2. A hafnium alloy having high corrosion resistance, consisting essentially, by weight, of 0.03 to 0.5% Sn, 0.05 to 0.5% Fe, 0.1 to 4.5% Zr, and the balance Hf and incidental impurities.

3. A hafnium alloy having high corrosion resistance, containing , by weight, 0.03 to 1.5% Sn, 0.03 to 2.0% Fe and 0.1 to4.5% Zr, the sum of the Hf and Zr contents being not less than 97% and the Sn/Fe ratio being from 0.2 to 1.6.

4. A hafnium alloy having high corrosion resistance, consisting essentially, by weight, of 0.03 to 0.5% Sn, 0.03 to 0.5 Fe, 0.03 to 0.5% Cr, 0.1 to 4.5% Zr, and the balance Hf and incidental impurities.

5. A hafnium alloy having high corrosion resistance, containing, by weight, 0.03 to 1.5% Sn, 0.03 to 2.0% Fe, 0.03 to 1.5% Cr and 0.1 to 4.5% Zr, the sum of the Hf and Zr contents being not less than 97% and the Sn/Fe+Cr ratio being from 0.05 to 0.5.

6. A hafnium alloy having high corrosion resistance, consisting essentially, by weight, of 0.03 to 0.5% Sn, 0.03 to 0.5% Cr, 0.1 to 4.5% Zr, and the balance Hf and incidental impurities.

7. A hafnium alloy having high corrosion resistance, containing, by weight, 0.03 to 1.5% Sn, 0.03 to 2.0% Fe, 0.03 to 1.5% Cr, 0.03 to 1.5% Nb and 0.1 to 4.5% Zr, the sum of the Hf and Zr contents being not less than 97% and the Sn/Fe+Cr+Nb ratio being from 0.1 to 0.5.

8. A hafnium alloy having high corrosion resistance, consisting essentially, by weight, of 0.03 to 0.5% Sn, 0.03 to 0.5% Fe, 0.03 to 0.5% Cr, 0.05 to 0.5% Nb, 0.1 to 4.5% Zr, and the balance Hf and incidental impurities.

9. A hafnium alloy having high corrosion resistance with an Hf content of not less than 97 wt. %, the Vickers hardness at room temperature in a condition as hot-rolled with a reduction of 50% of thickness being from 220 to 250 and the corrosion weight gain after heating in steam at 410°C for 8 hours and at 530°C for 16 hours being not more than 50 mg/cm².

10. A neutron absorber for reactor control rods, made of a hafnium alloy, comprising a strip-like cylindrical long member, said hafnium alloy containing, by weight, at least one selected from the group consisting of 0.03 to 1.5% Cr, 0.03 to 1.5% Sn and 0.03 to 2.0% FeO and the sum of the Hf and Zr contents being not less than 97%.

11. A neutron absorber for reactor control rods, made of a Hf alloy according to any one of claims 1 to 9, comprising a strip-like cylindrical long member.

12. A neutron absorber for reactor control rods according to claim 11, wherein an oxide film is formed on the surface of said long member.

13. A reactor control rod comprising a handle, a sheath connected to said handle, a neutron absorber installed in said sheath, a tie rod for securing said sheath in cross form, a fall speed limiter for controlling the fall speed in reactor water provided below said tie rod, and a coupling socket provided in the lower part of said limiter, said neutron absorber being made of a hafnium alloy containing, by weight, at least one selected from the group consisting of 0.03 to 1.5% Cr, 0.03 to 1.5% Sn and 0.03 to 2.0% FeO, the sum of the Hf and Zr contents being not less than 97%, and said neutron absorber being constructed as a strip-like cylindrical long member.

14. A neutron absorber for reactor control rods, made of a hafnium alloy, containing, by weight, 0.02 to 4.5% Zr and not less than 95% Hf, with oxide films formed on the surface thereof.

15. A neutron absorber for reactor control rods, made of a hafnium alloy, containing, by weight, at least one selected from the group consisting of 0.02 to 4.5% Zr, 0.01 to 1.5% Cr, 0.01 to 2.0% Fe, 0.03 to 1.5% Sn, 0.01 to 1.5% Nb and 0.01 to 2.0% Mo, in combination with not less than 95% Hf, with oxide films formed on the surface thereof.

16. A neutron absorber for reactor control rods according to claims 14 or 15, comprising a strip-like cylindrical long member.

17. A reactor control rod comprising a handle, a sheath connected to said handle, a neutron absorber installed in said sheath, a tie rod for securing said sheath in cross form, a fall speed limiter for controlling the fall speed in reactor water provided below said tie rod, and a coupling socket provided in the lower part of said limiter, said neutron absorber being made of the hafnium alloy according to claims 11, 12 or 16.

18. A reactor comprising a neutron-source pipe, a core support plate, a neutron counter, a control rod, a shroud, an upper lattice plate, a clad pipe, and a fuel assembly having a channel box as structural parts within a reactor pressure vessel, said control rod being made of the hafnium alloy according to claim 17.

19. A nuclear power generation plant having steam turbine that rotates by thermal output obtained from an atomic fuel housed in a reactor pressure vessel and thereby obtains electric output, in which said thermal output is not less than 3,200 MW, the reactor pressure being not lower than 7.0 MPa, the reactor water temperature being not lower than 288°C, and said electric output being not smaller than 1,100 MW, said nuclear power generation plant comprising neutron-source pipes, core support plates, neutron counters, control rods, shrouds, an upper lattice plate, a clad pipe, and fuel assemblies received in a channel box as structural parts within said reactor pressure vessel, said control rods being made of the hafnium alloy according to claim 17.
